(19) **Europäisches Patentamt / European Patent Office / Office européen des brevets**

(11) **EP 4 636 689 A1**

(12) **EUROPEAN PATENT APPLICATION**

(43) Date of publication:
**22.10.2025  Bulletin 2025/43**

(21) Application number: **24171305.6**

(22) Date of filing: **19.04.2024**

(51) International Patent Classification (IPC):
**G06T 7/11** $^{(2017.01)}$    **G06T 17/00** $^{(2006.01)}$

(52) Cooperative Patent Classification (CPC):
**G06T 7/11; G06T 17/00;** G06T 2200/04;
G06T 2207/10028; G06T 2207/20092;
G06T 2210/12; G06T 2210/56; G06V 20/64

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Technische Universität München**
**80333 München (DE)**

(72) Inventors:
• **Piccolrovazzi, Martin**
  **81543 München (DE)**

• **Steinbach, Eckehard**
  **82140 Olching (DE)**
• **Adam, Michael G.**
  **82223 Eichenau (DE)**
• **Zakour, Marsil**
  **81371 München (DE)**
• **Eger, Sebastian**
  **91301 Forchheim (DE)**

(74) Representative: **Lucke, Andreas**
  **Boehmert & Boehmert**
  **Anwaltspartnerschaft mbB**
  **Pettenkoferstrasse 22**
  **80336 München (DE)**

(54) **SYSTEM AND METHODS FOR DETECTION OBJECTS IN A SCANNED ENVIRONMENT USING DIMENSIONAL CUES**

(57)    This disclosure relates to methods, computer-readable media, devices and systems for detecting objects in a discrete set of data points forming a 3D point cloud (or map) representing a scan of an environment and/or for improving the 3D point cloud generation using a simultaneous localization and mapping (SLAM) algorithm. In some implementations, parameter cues, such as dimensional cues of objects in the environment and/or trajectory cues of the trajectory of the scanner that may be provided by language input of a user during the data acquisition process may be utilized to realize improvements in object detection and/or mapping of the environment by the SLAM algorithm.

100

```
obtain a discrete set of data
points forming a 3D point cloud          102

obtain dimensional data
describing spatial dimensions of         104
an object

generate BBVs of primitives
identified in at least a subset of       106
the discrete set of data points

find combination of BBVs that
has a bounding box whose                 108
extents best fit the spatial
dimensions of the object

identify the combination of
BBVs to correspond to the                110
object
```

Fig. 1

## Description

### Field of the Disclosure

This disclosure relates to methods, computer-readable media, devices and systems for detecting objects in a discrete set of data points forming a 3D point cloud (or map) representing a scan of an environment. This disclosure further relates to methods, computer-readable media, devices and systems for improving the 3D point cloud generation using a simultaneous localization and mapping (SLAM) algorithm.

### Technical Background

Real-world environments can be digitalized to create geometric digital twins in the form of 3D point clouds or image sequences using hand-held devices or mobile mapping systems. For example, Apple iPads, Microsoft Kinect, devices from Matterport, and indoor mobile mapping device from NavVis, have been used for the scanning and digitalization of real-world environments. Other solution in the automotive context use automobiles equipped with LiDAR sensors and/or RGB cameras to scan and digitize real-world environments to generate geometric digital twins. The 3D point clouds (sometimes also referred to as a "map") are built from the recorded data (image sequences or LiDAR scans) using simultaneous localization and mapping (SLAM) algorithms, noting that SLAM is a fundamental problem in robotics and computer vision. SLAM involves the ability of a robot or a system to simultaneously build a map of its environment while also accurately determining its own position within that map.

A SLAM system relies on various sensor inputs, such as cameras or LiDAR, to perceive its surroundings. It then uses these sensor measurements to estimate both its own motion (odometry) and the 3D structure of the reconstructed environment. By incorporating new sensor data overtime, SLAM systems continuously refine the estimated poses and update the map. SLAM algorithms may be categorized into two main types: filtering-based methods, such as the extended Kalman filter (EKF), and optimization-based methods, such as graph-based or bundle adjustment techniques. Filtering methods maintain a probability distribution over the robot's pose and the map, while optimization methods optimize a cost function that relates sensor measurements and estimated variables.

SLAM finds applications in a wide range of fields, including autonomous navigation, augmented reality, virtual reality, robotics, and even archaeological exploration. It enables robots to operate in unknown environments, explore and map new areas, and navigate autonomously without relying on pre-existing maps or external localization systems. However, SLAM is a challenging problem due to the uncertainties in sensor measurements, motion estimation errors, and computational complexities. Researchers continue to develop new algorithms and techniques to improve the accuracy, efficiency, and robustness of SLAM systems, making them an active area of research and development in the field of robotics and computer vision.

In several applications, SLAM is used to create geometric digital twins. For example, digital twins of large-scale factories environments can be used for inspection, surveying, target-driven navigation or planning applications. Many of the aforementioned use cases of digital twins require object-level annotations. Object-level annotation do often require domain knowledge for specific environments. In some implementations, the annotations are for example used to train deep neural network model for object detection (e.g. see Charles et al., "Imvotenet: Boosting 3d object detection in point clouds with image votes", Proceedings of the IEEE/CVF conference on computer vision and pattern recognition, pages 4404-4413, 2020; or Charles et al., "Deep hough voting for 3d object detection in point clouds", Proceedings of the IEEE/CVF International Conference on Computer Vision, pages 9277-9286, 2019, both incorporated herein by reference). For large-scale real-world scenes such as production environments, the data labeling process is a cumbersome task. For example, Baruch et al.," ARKitscenes - a diverse real-world dataset for3d indoor scene understanding using mobile RGB-d data", 35th Conference on Neural Information Processing Systems Datasets and Benchmarks Track (Round 1), 2021, incorporated herein by reference, provides a ARKitScenes dataset, which consists of thousands of scenes with oriented bounding boxes. This is especially difficult to annotate, since the bounding boxes are oriented, and the human annotator must explicitly search for the objects to be annotated.

### Summary

The disclosure explores the possibility of utilizing additional user input during the mapping process performed by the SLAM algorithm and/or to speed-up the annotation process. Some aspects of this disclosure may be based on the idea of providing additional information about parameters of the objects of interest in an environment, e.g. during the data acquisition process, that can be subsequently used in the object detection process. In some example embodiments, the additional information regarding the objects of interest and/or the trajectory of the data acquisition device may be provided by a user, e.g. by means of a speech input. The parameters described by the object information may for example include object dimensions, object color, object material, etc.

In this context, one aspect of this disclosure relates methods, computer-readable media, devices and systems for detecting objects in a discrete set of data points forming a 3D point cloud (or map) representing a scan of an environment. The different embodiments of the disclosure may extend simultaneous localization and mapping (SLAM) approaches, including but not limited to visual SLAM (V-SLAM), by using object data describing parameters of the object, such as for example one or more of spatial dimensions of an object (e.g. object width, height and depth) of the one or more objects (or a part thereof), the object's color, and/or the object's material in the environment to improve the object detection within a 3D point cloud. The object data describing parameters of the object may be obtained from speech input of a user (e.g. the user providing an estimation of the object width, height and depth). The object data may be, for example, used in finding a set of bounding box (BBVs) volumes of primitives/segments in a discrete set of data points forming the 3D point cloud representing a scan of the environment that match the object of interest (or at least a part thereof) in the environment. The object data may thus also be considered a prior to an object search algorithm (e.g. a tree search algorithm). When using dimensional data that describe the spatial dimensions of the object of interest as a prior, the object search algorithm may use the prior to maximize/minimize a spatial metric that is considered in selecting the optimal combination of BBVs that is to form an object in the environment. Considering one or more of dimensional data describing in the spatial dimensions, object color and/or object material in the process of identifying the optimal combination of bounding box volumes that defines or encloses the object (or a part thereof) may allow for significant improvements in the accuracy of the object search algorithm and/or for improvements in the convergence of the object search algorithm. This may not only speed up the identification objects by a search algorithm, but also saves power in performing the process. In some embodiments, and not limited in this respect, the object data may be obtained as part of the data acquisition process, e.g. along with the scanning of the environment using one or more sensors.

Another, second aspect of this disclosure is related to methods, computer-readable media, devices and systems for improving the 3D point cloud generation using a simultaneous localization and mapping (SLAM) algorithm. In this aspect, which can be combined with the first aspect, trajectory data descriptive for at least a portion of a trajectory traveled by a camera in recording a series of images that are used to generate the 3D point cloud using a SLAM algorithm are considered by the SLAM algorithm as a prior in the generation of the 3D point cloud, e.g. to facilitate more reliable loop closure and/or to improve the estimation of the trajectory by the SLAM algorithm. The trajectory data may be obtained from speech input of a user. The trajectory data may provide trajectory hints and/or trajectory cues (e.g. spoken hints or cues such as for example "I am turning 90° to the left", "I am walking straight on", "visiting point 1 ", "revisiting point 1", etc.) associated with individual images or sub-sequences of images in the series of images processed by the SLAM algorithm. The consideration of trajectory data as a prior in SLAM may allow the SLAM algorithm to reduce drift in the estimated trajectory and 3D point cloud (or map) and may thus allow for improving the localization within the environment. This can in turn improve object recognition based on discrete data sets forming a 3D point cloud (or map) representing a scan of an environment.

One example embodiment provides a computer-implemented mapping method. The method may be used for object recognition of at least one object within an environment. The method may include obtaining a discrete set of data points forming a 3D point cloud (or map) representing a scan of an environment comprising one or more objects; obtaining object data, the object data including at least dimensional data describing spatial dimensions of an object of the one or more objects in the environment, the object data being associated with a position within the environment; generating bounding box volumes of primitives identified in at least a subset of the discrete set of data points forming said 3D point cloud around the position associated with the dimensional data of the object, said subset forming a portion of the environment; finding a combination of bounding box volumes that includes spatially co-located bounding box volumes in said subset of the discrete set of data points around the position associated with the dimensional data of the object and that has bounding box whose extents best fit the spatial dimensions of the object; and identifying the combination of bounding box volumes to correspond to the object.

In some embodiments discussed herein, the object data includes dimensional data (only). In other embodiments discussed herein, the object data may further include color data and/or material data that describe the color and/or material of the object. In yet other embodiments discussed herein, the object data may be color data and/or material data. In some embodiments, the object data may not be "static", e.g. may have different contents as to dimensions, color and material for the different objects in the environment.

In some embodiments, the object data is further associated not only with a position, but further with an orientation of the user in the environment. The method may further comprise selecting the subset of the discrete set of data points forming said 3D point cloud based on the position and orientation of the user in the environment. In an example improvement of this embodiment, the method may further include determining a human field of view of the user based on the position and orientation of the user in the environment; and selecting the subset of the discrete set of data points forming said 3D point cloud around said position to correspond to a subset of the discrete set of data points that is in the field of view of the user. Optionally, the subset of the discrete set of data points forming said 3D point cloud around said position is selected as a subset of the discrete set of data points that is in the field of view of the user and within a maximum distance from the position of user in the environment.

In some embodiments, finding a combination of bounding box volumes that includes spatially co-located bounding box volumes comprises performing a tree search (e.g. a deterministic tree search) over combinations of bounding box volumes of primitives to find said combination of bounding box volumes having bounding box whose extents best fit the spatial dimensions of the object. The (deterministic) tree search may comprise comparing spatial dimensions of a bounding box of the respective combinations of bounding box volumes with the spatial dimensions of the object described in the dimensional data.

In some embodiments, the method may include receiving audio data of a speech input of a user, the speech input including an oral description of object parameters and optionally an approximated position of the object in the environment; extracting the object parameters and optionally the approximated position of the object in the environment from the audio data; and generating the object data based on the extracted parameters of the object and optionally further based on the approximated position of the object in the environment. The object data may for example include to one or more of dimensional data describing in the spatial dimensions, color data describing the object color and/or material data describing the object material. In some example embodiments, the method may include receiving audio data of a speech input of a user, the speech input including an oral description of spatial dimensions of the object and optionally an approximated position of the object in the environment; extracting said spatial dimensions of the object and optionally the approximated position of the object in the environment from the audio data; and generating the dimensional data based on the extracted spatial dimensions of the object and optionally further based on the approximated position of the object in the environment. In an example improvement of this embodiment, a recording device recording the speech input of the user may be in a fixed or known spatial interrelation with a scanner used to scan the environment, e.g. so that position of the recording device and the position of the scanner coincide with one another. In an alternative or additional example improvement of this embodiment, upon recording the speech input of the user, the human field of view of the user is supposed to match with a field of view of the scanner used to scan the environment. This may be for example useful for selecting a subset of the discrete set of data points forming said 3D point cloud around the position associated with the object data of the object in which the object may be searched.

In some embodiments, generating the bounding box volumes of primitives generates bounding box volumes for the primitives (e.g. all primitives) in the discrete set of data points forming said 3D point cloud. In yet some further embodiments, the method may further comprise identifying the primitives in the discrete set of data points forming said 3D point cloud.

In further embodiments, the method may further comprise performing a 3D scanning of the environment with one or more sensors. The one or more sensors may for example comprise one or more sensors selected from a group comprising: monocular cameras, stereo cameras, time-of-flight (TOF) cameras (RGB-D), LiDAR sensors, and 3D laser scanners.

In some embodiments, and in accordance with the second aspect, the one or more sensors of the scanner may include a camera, being either one of a stereo camera, monocular camera with an inertial measurement unit (IMU) or a time-of-flight (TOF) camera (RGB-D). In these embodiments, performing the 3D scanning of the environment may include using the camera to record a series of images of the environment recorded along a trajectory at spatially distinct positions; generating the 3D point cloud of the scanned environment based on series of images of the environment using a simultaneous localization and mapping (SLAM) algorithm; receiving trajectory data describing the trajectory traveled by the camera in recording the series of images. The SLAM algorithm may be adapted to consider the trajectory data as a prior in generating the 3D point cloud of the scanned environment. For example, in some example implementation, the SLAM algorithm is adapted to consider the trajectory data as a prior for loop closure and/or to improve the estimation of the trajectory by the SLAM algorithm. For example, in some example implementations, the trajectory data describe the trajectory traveled by the camera in recording the series of images comprises individual trajectory hints and/or trajectory cues associated with individual images or sub-sequences of images in the series of images.

Other embodiments of the disclosure provide a system that may for example facilitate object detection. The system may comprise a scanner configured to perform a scan an environment comprising one or more objects; and a processing unit. The processing unit may be configured to obtain a discrete set of data points forming a 3D point cloud representing said scan of the environment; obtain object data, the object data including at least dimensional data describing spatial dimensions of an object of the one or more objects in the environment, the object data being associated with a position within the environment; generate bounding box volumes of primitives identified in at least a subset of the discrete set of data points forming said 3D point cloud around the position associated with the dimensional data of the object, said subset forming a portion of the environment; find a combination of bounding box volumes that includes spatially co-located bounding box volumes in said subset of the discrete set of data points around the position associated with the dimensional data of the object and that has bounding box whose extents best fit the spatial dimensions of the object; and identify the combination of bounding box volumes to correspond to the object.

In some embodiments, the object data is further associated with a position and orientation of the user in the environment. The processing unit is configured to select the subset of the discrete set of data points forming said 3D point cloud based on the position and orientation of the user in the environment.

In some embodiments, the processing unit is further configured to determine a human field of view of the user based on the position and orientation of the user in the environment; and select the subset of the discrete set of data points forming said 3D point cloud around said position to correspond to a subset of the discrete set of data points that is in the field of view of the user and optionally within a maximum distance from the position of user in the environment.

In further embodiments, the processing unit is configured to form the set of bounding box volumes by performing a (deterministic) tree search over combinations of bounding box volumes of primitives to find said combination of bounding box volumes having bounding box whose extents best fit the spatial dimensions of the object. The (deterministic) tree search may comprise comparing spatial dimensions of a bounding box of the respective combinations of bounding box volumes with the spatial dimensions of the object described in the dimensional data.

In some embodiments, the system further comprises a recording device configured record audio data of a speech input of a user, the speech input including an oral description of object parameters and optionally an approximated position of the object in the environment. The processing unit may be further configured to receive the audio data comprising said speech input of a user; extract the object parameters and optionally the approximated position of the object in the environment from the audio data; and generate the object data based on the extracted parameters of the object and optionally further based on the approximated position of the object in the environment. The object data may for example include to one or more of dimensional data describing in the spatial dimensions, color data describing the object color and/or material data describing the object material. In some embodiments, the system further comprises a recording device configured record audio data of a speech input of the user, the speech input including an oral description of spatial dimensions of the object and optionally an approximated position of the object in the environment. The processing unit may be further configured to receive the audio data comprising said speech input of a user; extract said spatial dimensions of the object and optionally the approximated position of the object in the environment from the audio data; and generate the dimensional data based on the extracted spatial dimensions of the object and optionally further based on the approximated position of the object in the environment. In an example implementation, the recording device is in a fixed or known spatial interrelation with a scanner unit so that position of the recording device and the scanner coincide with one another. In a further example implementation, the processing unit may assume that the human field of view of the user is supposed to match with a field of view of the scanner used to scan the environment upon recording the speech input of the user.

In some further embodiments, the processing unit is configured to bounding box volumes for the primitives (e.g. all primitives) in the discrete set of data points forming said 3D point cloud. In yet further embodiments, the processing unit is further configured to identify the primitives in the discrete set of data points forming said 3D point cloud.

According to some embodiments, the scanner includes one or more sensors and is configured to perform 3D scanning of the environment with said one or more sensors. For example, the one or more sensors of the scanner may comprise one or more sensors selected from a group comprising: monocular cameras, stereo cameras, time-of-flight (TOF) cameras (RGB-D), LiDAR sensors, and 3D laser scanners.

In some example embodiments, the one or more sensors include a camera, being either one of a stereo camera, monocular camera with an inertial measurement unit (IMU) or a time-of-flight (TOF) camera (RGB-D). In these embodiments, the scanner is configured to perform the 3D scanning of the environment includes using the camera to record a series of images of the environment recorded along a trajectory at spatially distinct positions. The processing unit is further configured to generate the 3D point cloud of the scanned environment based on series of images of the environment using a simultaneous localization and mapping (SLAM) algorithm; and receive trajectory data describing the trajectory traveled by the camera in recording the series of images. The SLAM algorithm is adapted to consider the trajectory data as a prior in generating the 3D point cloud of the scanned environment. For example, the SLAM algorithm may be adapted to consider the trajectory data as a prior for loop closure and/or to improve the estimation of the trajectory by the SLAM algorithm.

In some embodiments, the trajectory data describe the trajectory of the camera in recording the series of images. The trajectory data may comprise individual trajectory hints and/or trajectory cues associated with individual images or sub-sequences of images in the series of images.

Further embodiments relate to one or more computer-readable media that store instructions that, when executed by a processor unit, cause the processor unit to obtain a discrete set of data points forming a 3D point cloud representing a scan of an environment comprising one or more objects; obtain object data, the object data including dimensional data describing spatial dimensions of an object of the one or more objects in the environment, the dimensional data being associated with a position within the environment; generate bounding box volumes of primitives identified in at least a subset of the discrete set of data points forming said 3D point cloud around the position associated with the object data of the object, said subset forming a portion of the environment; find a combination of bounding box volumes that includes spatially co-located bounding box volumes in said subset of the discrete set of data points around the position associated with the dimensional data of the object and that has bounding box whose extents best fit the spatial dimensions of the object; and identify the combination of bounding box volumes to correspond to the object.

In some embodiments, the object data can be associated with a position and orientation of the user in the environment. The one or more computer readable media may further store instructions that, when executed by the processor unit, cause the processor unit to select the subset of the discrete set of data points forming said 3D point cloud based on the position and orientation of the user in the environment. In some example implementations, the one or more computer readable media may further store instructions that, when executed by the processor unit, cause the processor unit to determine a human field of view of the user based on the position and orientation of the user in the environment; and to select the subset of the discrete set of data points forming said 3D point cloud around said position to correspond to a subset of the discrete set of data points that is in the field of view of the user and optionally within a maximum distance from the position of user in the environment.

In some embodiments, the one or more computer readable media further stores instructions that, when executed by the processor unit, cause the processor unit to form the set of bounding box volumes by performing a (deterministic) tree search over combinations of bounding box volumes of primitives to find said combination of bounding box volumes having bounding box whose extents best fit the spatial dimensions of the object. The (deterministic) tree search comprises comparing spatial dimensions of a bounding box of the respective combinations of bounding box volumes with the spatial dimensions of the object described in the dimensional data.

In further embodiments, the one or more computer readable media may further store instructions that, when executed by the processor unit, cause the processor unit to receive audio data of a speech input of a user, the speech input including an oral description of object parameters and optionally an approximated position of the object in the environment; to extract the object parameters and optionally the approximated position of the object in the environment from the audio data; and to generate the object data based on the extracted parameters of the object and optionally further based on the approximated position of the object in the environment. The object data may for example include to one or more of dimensional data describing in the spatial dimensions, color data describing the object color and/or material data describing the object material. In further embodiments, the one or more computer readable media may further store instructions that, when executed by the processor unit, cause the processor unit to receive audio data of a speech input of a user, the speech input including an oral description of spatial dimensions of the object and optionally an approximated position of the object in the environment; to extract said spatial dimensions of the object and optionally the approximated position of the object in the environment from the audio data; and to generate the dimensional data based on the extracted spatial dimensions of the object and optionally further based on the approximated position of the object in the environment.

In yet some further embodiments, the one or more computer readable media may further store instructions that, when executed by the processor unit, cause the processor unit to generate bounding box volumes for the primitives in the discrete set of data points forming said 3D point cloud.

According to some embodiments, the one or more computer readable media may further store instructions that, when executed by the processor unit, cause the processor unit to identify the primitives in the discrete set of data points forming said 3D point cloud.

Some embodiments relate to a computing device. The computing device may comprise the one or more computer readable media according to one of the example embodiments described herein. The device may also comprise a processing unit configured to execute the instructions stored on the one or more computer readable media.

## Brief Description of Drawings

For a better understanding of the disclosure, and in particular the aspects, example embodiments and example implementations thereof, reference should be made to the Detailed Description below, in conjunction with the following drawings in which like reference numerals refer to corresponding parts throughout the drawings.

**Fig. 1** illustrates an example embodiment of a method 100 that allows detecting an object in a discrete set of data points forming a 3D point cloud (or map);

**Fig. 2** illustrates an example embodiment of a method 200 that produces a discrete set of data points forming a 3D point cloud (or map) representing a scan of an environment; and

**Fig. 5** shows a system 500 in which embodiments of this disclosure can be implemented.

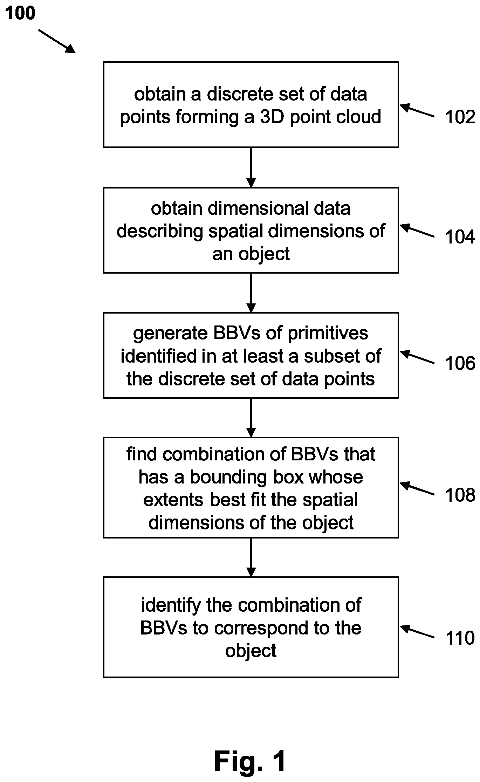

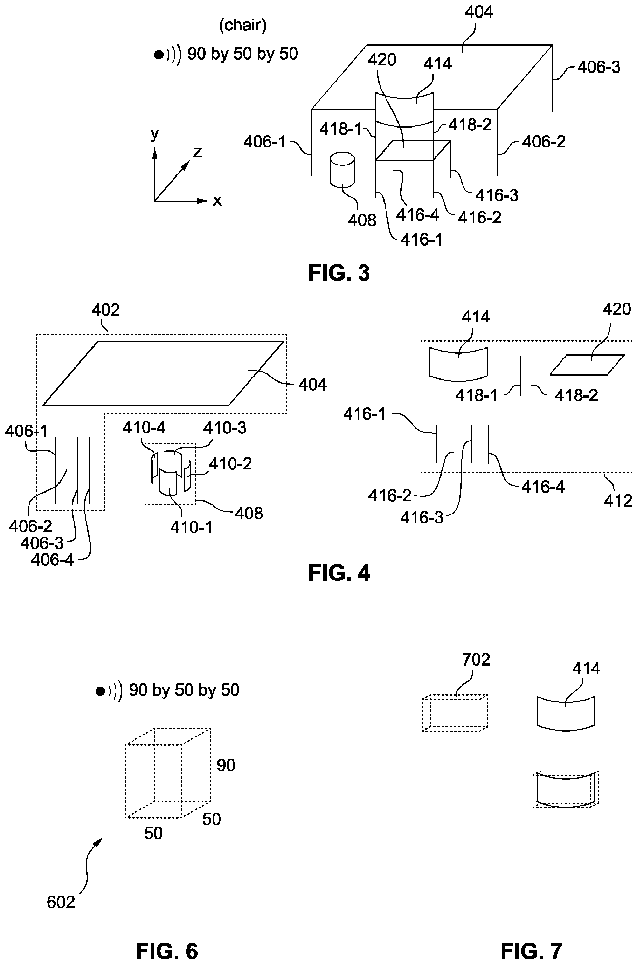

Figs. 3, 4 and 6 to 14 illustrate an example embodiment of performing object detection in line with the method 100 discussed in connection with Fig. 1.

## Detailed Description

This disclosure relates methods, computer-readable media, devices and systems for detecting objects in a discrete set of data points forming a 3D point cloud (or map) representing a scan of an environment and for improving the 3D point cloud generation using a simultaneous localization and mapping (SLAM) algorithm.

In a first aspect, the different embodiments of the disclosure may extend simultaneous localization and mapping (SLAM) approaches, including but not limited to visual SLAM (V-SLAM), by using dimensional data describing spatial dimensions of an object (e.g. object width, height and depth) of the one or more objects (or a part thereof) in the environment to improve the object detection within a 3D point cloud. V-SLAM may for example refer to a SLAM algorithm processing on 2D data (e.g. 2D image sequences, stereo-images, depth images, etc.), while SLAM may for example refer to a SLAM algorithm processing 3D data (e.g. LiDAR scans, radar, etc.)

In some example embodiments, the dimensional data may be obtained from speech input of a user (e.g. the user providing an estimation of the object width, height and depth). The user may thus be further involved in the data acquisition process by providing language prompts as additional information to the object search algorithm (e.g. a tree search algorithm that operates on the primitives of a 3D point cloud (also referred to as a map) obtained from SLAM). The speech input provided by the user can be used to support various applications or steps during or after the recording or scanning of an environment. For example, the user's speech input may refer to objects of interest while mapping the environment and this additional input could be used to automatically set points of interests (POIs) in the reconstructed map, thus saving time in processing. For example, the object-related speech input may provide dimensional data of one or more objects in the scanned environment, e.g. the object width, height and depth, and optionally a position cue or hint. The dimensional data may be for example used in finding a set of bounding box (BBVs) volumes of primitives in a discrete set of data points forming the 3D point cloud representing a scan of the environment that are matching an object (or at least a part thereof) in the environment. The dimensional data may thus also be considered a prior to an object search algorithm (e.g. a tree search algorithm) that allows to maximize/minimize a spatial metric that is considered in selecting the optimal combination of BBVs that is to form an object in the environment. Considering the dimensional data describing in the spatial dimensions in the process of identifying the optimal combination of bounding box volumes that defines or encloses the object (or a part thereof) may allow for significant improvements in the accuracy of the object search algorithm and/or for improvements in the convergence of the object search algorithm. This may not only speed up the identification objects by a search algorithm, but also saves power in performing the process. In some embodiments, and not limited in this respect, the dimensional data may be obtained as part of the data acquisition process, e.g. along with the scanning of the environment using one or more sensors.

Alternatively or in addition, and in line with a second aspect, trajectory data descriptive for at least a portion of a trajectory traveled by a camera in recording a series of images that are used to generate the 3D point cloud using a SLAM algorithm are considered by the SLAM algorithm as a prior in the generation of the 3D point cloud, e.g. to facilitate more reliable loop closure and/or to improve the estimation of the trajectory by the SLAM algorithm.

The trajectory data may be obtained from speech input by the user. This is based on the observation that humans can accurately estimate their ego-motion, specifically when performing rotations of 90° or 180°. The speech input may for example contain spoken directional cues or hints (e.g. "I am turning 90° to the left", "I am walking straight on", "visiting point 1 ", "revisiting point 1", etc.) which may be used to obtain trajectory data that can be provided as a prior to the SLAM algorithm. The trajectory data could be for example used in determining loop closures in the SLAM algorithm when the user crosses his/her own path. The trajectory data may thus provide trajectory hints and/or trajectory cues (associated with individual images or sub-sequences of images in the series of images processed by the SLAM algorithm. The computations of the orientation between the two language inputs by the SLAM algorithm may be modified to consider the provided prior, within some margin of error. Another possibility is to follow markings on the floor or by the geometry of the environment, which may be practical in (but not limited to) man-made environments (e.g. buildings, roads, sidewalks) that may have "markings" that can be used to ensure a straight trajectory. The consideration of trajectory data as a prior in SLAM may allow the SLAM algorithm to reduce drift in the estimated trajectory and 3D point cloud (or map) and may thus allow for improving the localization within the environment. This can in turn improve object recognition based on discrete data sets forming a 3D point cloud (or map) representing a scan of an environment.

Fig. 1 illustrates an example embodiment of a method 100 that allows detecting an object in a discrete set of data points forming a 3D point cloud (or map) representing a scan of an environment and for improving the 3D point cloud generation using a simultaneous localization and mapping (SLAM) algorithm. The method 100 shown in Fig. 1 may be computer-implemented and may be realized by means of software instructions that are stored on a computer-readable medium for plural computer-readable media. The method 100 of Fig. 1 may assume that a SLAM algorithm has already produced a 3D point cloud of an environment containing one or more objects of interest. The process 100 in Fig. 1 may thus be used to detect one or more of those objects of interest in the environment. If dimensional data in block 104 contain dimensions for plural objects in the target scene/environment, the steps outlined in connection with blocks 106, 108, and 110 may be repeated for each of the target objects of the search.

At 102, a discrete set of data points forming the 3D point cloud is obtained. The 3D point cloud may be also referred to as a map. The 3D point cloud represents a scan of an environment comprising one or more objects of interest.

At 104, dimensional data describing the spatial dimensions of one of the objects in the environment is obtained. The dimensional data may for example indicate the width, height and depth of the object. Optionally, the dimensional data may be further associated with a position and orientation of the user in the environment. The consideration of the position and/or orientation of the user in the environment may allow selecting of a subset of the set of data points forming the 3D point cloud in which the object is to be searched. Optionally, block 104 may further include the determination of a human the field of view of the user. The determination may be based on the position and/or orientation of the user in the environment, as indicated for example by the dimensional data (e.g. upon recording the dimensional data). The subset of the discrete set of data points forming the 3D point cloud may be selected around the position and within the field of view of the user. The dimensional data may thus yield a subset of the data points for subsequent object search to restrict the area of the object search.

Optionally, this selection may be further based on a maximum distance from the position of the user in the environment, for example the subset may only contain data points of the 3D point cloud within a predetermined distance from the position of the user. For example, starting from a pose of the user (position and orientation/field of view) associated with the dimensions of the object as described in the dimensional data, a frustum whose aperture angle is defined by the largest dimension at a threshold distance (e.g. 1 meter, 2 meter, etc.) in observation direction (e.g. with some additional tolerance) is used in selecting as subset of the discrete data points in the 3D point cloud corresponding to the recorded environment. The frustrum parameters and threshold distance may could be for example adapted to match the scanning device and/or user preference. The object of interest for which the prior (i.e. the object's spatial dimensions) is provided must be contained in the frustum. In case the accuracy of the SLAM algorithm is not known or has proved to be less accurate, the parameters and threshold distance nay be adapted to ensure that the object is fully present in the frustum.

In other example implementations, it is possible to limit the search space (e.g. frustum relative to the user's position) within the set of data points solely on an orientation of the user in the environment. It is also possible that the object search is performed on all data points that form the 3D point cloud, which would however increase complexity and processing time.

At 106, BBVs for the primitives that are identified within the subset of the discrete data points are generated. In one example, the primitives for which BBVs are generated may be determined in consideration of the position associated with the dimensional data of the object of interest so that the BBVs do not need to be generated for all primitives found in the set of data points forming the 3D point cloud of the environment. For instance, the dimensions of the object to be searched, as described in the dimensional data, together with the position may be used to determine a volume within the 3D point cloud and only the primitives found in such a volume may be attributed a BBV. Optionally, the BBVs may be determined for all the primitives in the entire set of discrete data points forming the 3D point cloud, if the search space is not restricted. The BBVs may be 9DOF BBVs (9DOF = 9 degrees of freedom). For example, and not limited in this respect, BBVs may be found as suggested in Chang et al., "Fast oriented bounding box optimization on the rotation group $SO(3, \mathbb{R})$ ", ACM Transactions on Graphics (TOG), Volume 30, Issue 5, pages 1-16, 2011, incorporated herein by reference.

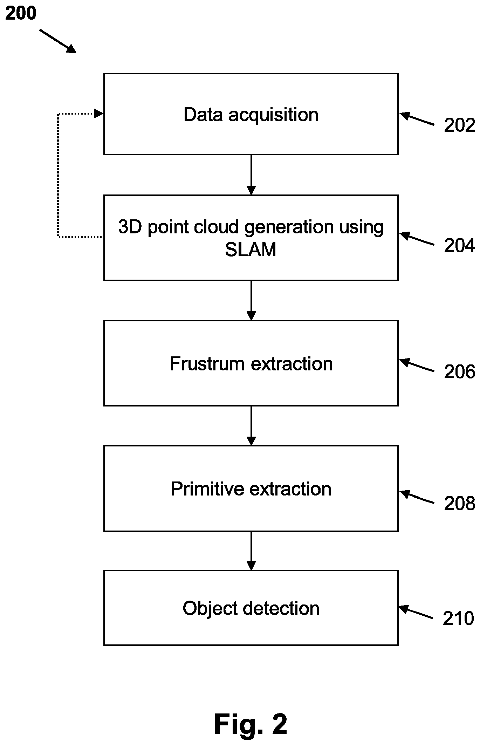

The process may optionally include an extraction of the primitives from the discrete (sub)set of data points forming the 3D point cloud (e.g. prior to block 108). Primitive extraction will be discussed in more detail in connection with Fig. 2 herein below.

At 108, a combination of the BBVs of spatially co-located BBVs is found in the(sub)set of discrete data points that has the bounding box with a maximum volume still fitting into the spatial dimensions of the object. Spatially co-located may e.g. mean spatial proximity, i.e. BBVs of primitives which are close to each other in the 3D point cloud may be selected for combination, as it is more likely that they belong to the same object. The process of finding an optimum combination of BBVs that has a bounding box with a maximum volume still fitting into the spatial dimensions of the object of interest may be implemented by an iterative process. The process may be realized, for example, using a tree search algorithm over combinations of BBVs of the primitives to find the combination of BBVs having a bounding box with the maximum volume. The tree search may be deterministic. The tree search may comprise comparing the spatial dimension of the bounding box of respective combinations of BBVs with the spatial dimensions of the object as described in the dimensional data. Hence, the dimensions of the object as described by the dimensional data may be used as a prior of the tree search algorithm so as to provide a combination of BBVs/primitives that have a bounding box that best fits the prior. The tree search algorithm may be for example a Monte Carlo tree search (MCTS) algorithm or may be tree search algorithm that is based on a Monte Carlo tree search algorithm, yet without its simulation step. The simulation step of the conventional Monte Carlo search may be omitted, as experiments yield better results in the object search in some envisioned scenarios: MCTS is often used in closed games, while for object detection in an unknown environment, it is difficult to define a clear "end of game". Furthermore, the proper definition of the rewards of the simulation step appears difficult and might therefore have a negative impact on the object detection if not properly defined. In some example implementation, the tree search algorithm starts from the root node and the tree may be initialized by setting all plan a primitives as his children. The tree is then traversed using the selection, expansion and update steps of a Monte Carlo tree search algorithm (see for example Browne et al., "A survey of monte carlo tree search methods", IEEE Transactions on Computational Intelligence and AI in games; Volume 4, Issue 1, pages 1-43, 2012, incorporated herein by reference, showing an overview of tree Monte Carlo-based search algorithms usable in block 108). The tree search terminates, and the object is identified as corresponding to the object of interest, if a termination criterion or plural termination criteria are met. One such termination criterion may be for example a volume threshold below which a BBV combination may be considered to match with the searched object having the dimensions as defined by its dimensional data. Alternatively, each dimension in the 3D space may be associated with a threshold criterion (e.g. max. allowed difference to a target value) based on the width, height and depth of the object as defined in its dimensional data. In this case, the search may be terminated if the BBV combination matches the threshold criteria in all three dimensions.

In the example discussed in connection with method 100 in Fig. 1, the objects are constructed by combining primitives, respectively, their BBVs. Thus, over-segmentation is less likely to decrease the retrieval performance than under-segmentation to a certain degree. By over-segmenting, parameters, which depend on the sensors in the data acquisition process and the 3D point cloud density, do not need to be adapted. For example, the normal vector threshold should be reduced, if the scene/environment is reconstructed with a data acquisition device that has higher distortions, and the minimum points threshold may be adapted in case the point cloud resolution is lower.

At step 110, when the primitives of the BBV combination that lead to termination of the object search in block 108 is determined as the object corresponding to the dimensions described in in its dimensional data.

The map of the environment and the objects detected in the environment may be for example used in robotics. In some examples, the map of the environment and the detected objects in the environment may enable robots to operate in an unknown environment, explore and map new areas, and navigate autonomously without relying on pre-existing maps or external localization systems. The environment and the objects detected in the environment may also be used to avoid one or more objects in the environment or to manipulate an object identified in the environment. In some embodiments, the method 100 in Fig. 1 (and optionally further method 200 as discussed in connection with Fig. 2 below) may be implemented in a robot. For example, the robot may include a scanning device or scanning system ("scanner") is suitable to reconstruct a 3D point cloud of an environment using a SLAM algorithm as discussed below so as to autonomously generate and/or update a map of an environment to enable autonomous operation of the robot within the environment. The environment may be for example an indoor environment, e.g. a factory hall, a lab, or an area of operation of a robot (e.g. a robot arm) in a production line; but in principle the environment could also be an outdoor environment or a mixed indoor and outdoor environment. However, these examples are exemplary, and object detection as discussed herein can be used in other scenarios, such as - and not limited thereto - autonomous navigation of vehicles/robots, augmented reality, virtual reality, or archaeological exploration. The object detection method 100 may allow identifying a purely geometric representation of an environment, but also a semantic representation of the environment. Hence, besides its use in robotics, the object detection method 100 can be employed in many use cases such as object inspection, inventorying of objects in the environment where the detected objects are added and/or cross-checked against an inventory list, target driven navigation, anomaly detection, or change detection. Detected object can also be used for planning or storage (e.g. in large warehouses), e.g. to verify if one object can also fit in another location.

Fig. 2 illustrates an example embodiment of a method 200 that produces a discrete set of data points forming a 3D point cloud (or map) representing a scan of an environment and for improving the 3D point cloud generation using a simultaneous localization and mapping (SLAM) algorithm. The method 200 shown in Fig. 2 may be computer-implemented and may be realized by means of software instructions that are stored on a computer-readable medium for plural computer-readable media. The method 200 may be performed prior to method 100, e.g. the step 209 of method 200 may be implemented using method 100.

Block 202 exemplifies a data acquisition process. The data acquisition process may obtain a scan and/or image data of the target environment comprising one or more objects of interest. The data acquisition process may also comprise the generation of dimensional data as used in method 100 and/or trajectory data that describe (at least a portion of) a trajectory traveled by a in image recording device (e.g. camera) in recording a series of images that are used to generate the 3D point cloud using a SLAM algorithm are considered by the SLAM algorithm as a prior in the generation of the 3D point cloud. The dimensional data and/or trajectory data may be obtained, at least in part, from speech input of a user.

For example, the scans/image data may be retrieved in block 202 using a state-of-the-art mobile indoor mapping system for the data acquisition process. The disclosure is not restricted to any specific type of device, and other data acquisition system can also be used. The only requirement is that the scanning device or scanning system ("scanner") is suitable to reconstruct a 3D point cloud of an environment using a SLAM algorithm. The scanner may for example use one or more sensors to scan or image the environment. For example, the one or more sensors may be selected from a group comprising: monocular cameras, stereo cameras, time-of-flight (TOF) cameras (RGB-D), LiDAR sensors, 3D laser scanners, and/or radar sensors. Typically, cameras or LiDAR sensors record a series of images as the camera/sensor moves in the environment (thereby traveling along a trajectory in the recording process), while 3D laser scanners are commonly stationary when recording the environment. However, 3D laser sensors may be positioned at different locations of the environment when recording the environment.

During the data acquisition of block 202, the user may provide language prompts which are converted to another modality to obtain object data, such as one or more of dimensional data, color data, material data and/or trajectory data. The language input of the user may be converted using, for example, a speech-to-text method. The speech input may be following a predetermined or adaptive grammar and/or syntax.

For instance, the description of an object (or its parameters) in the scene may be in the format <Object height by width by depth>. The description of the objects may optionally or alternatively include object information or parameters, such as object color, object name/type ("table", "chair", "shelf", ...), object color, object material, object price, etc. that may be useful in identifying the object in the scan or images of the environment. In some examples, object information or parameters (e.g. object color) may be used as a prior or another additional prior in the object detection process of method 100 in Fig. 1. Trajectory data may for example indicate the movement of the scanner (or user carrying the scanner) so that a sequence of directional cues may be used to describe the trajectory traveled by the camera in recording the series of images of the environment based on which the 3D point cloud is to be constructed using (V-)SLAM. For example, the user may make spoke cues, such as for example "I am turning 90° clockwise/counterclockwise", "I am turning around.", "I am moving straight" followed by "Done" or another cue indicating stop of the movement, "Set location X", "Returning to location X", etc. which indicate specific changes of the FOV or movement of the user/scanner and/or loop closure of loops in the trajectory. The use of a (simple) grammar and syntax allows to reduce the overall complexity of the data acquisition process, since the implementations do not require and do not need to use a large language model (LLM) to recognize the speech input. In some embodiments, the trajectory data may be alternatively or additionally obtained using sensor data. The sensor data may be associated with the corresponding parts of the scan or recorded images of the scanner using, for example, timestamps. In some embodiments, the scanner may be equipped with one or more of a positioning system (e.g. GPS), an accelerometer, gyroscope, magnetometer, etc. or combinations thereof to determine the position and/or trajectory of the scanner. The scanner may include an inertial measurement unit (IMU) that combines multiple motion sensors such as accelerometers, gyroscopes, and sometimes magnetometers into a single unit to determine the position and/or trajectory of the scanner. In another example, the scanner may use triangulation of wireless signals (e.g. WiFi or cellular) to detect a position and/or trajectory of the scanner in recording the environment. The selection of the sensor(s) to be used by the sensor for scanning/imaging may depend on the object information or parameters to be used as a prior. For example, if the color of the objects is to be used as a prior, a LiDAR sensor alone may not be sufficient for scanning the environment, even though some newer LiDAR sensors might return additional information. In such example, the scanner might be equipped with a combination if a LiDAR scanner and a RGB camera, for example. Further, for detecting material properties or parameters of the objects, the scanner may for example use a radar-based sensor.

Optionally, the pose of the scanner during the recording process may be recorded along with the user's description of the dimensions of an object so that the pose of the user (including for example, the scanner's position in the environment and/or the scanner's field of view) and/or the recording of the trajectory data. Hence, the dimensional data of an object may not only contain the width, height and depth of the object, but optionally further the pose of the scanner (e.g. the position and/or field of view). Similarly, the trajectory data may not only include the indication of the change of the orientation or the movement of the scanner, but additionally the pose of the scanner (e.g. the position and/or field of view) and a timestamp or other piece of information allowing to associate individual images or sub-sequences of images in the series of images with the spoken trajectory cues/hints of the specific piece of trajectory data.

In general, the pose of the scanner may be for example describe the orientation of the respective sensor(s) (e.g. in a horizontal plane through the center of the sensor's FOV, or in both horizontal plane and vertical plane through the center of the sensor's FOV). If multiple sensors are used and are near each other, they may be assumed to define a sensor arrangement that has common FOV, and the pose may thus relate to the orientation of the sensor arrangement. If the sensors in such sensor arrangement have substantially different FOVs (e.g. pointing in different directions), the fixed spatial interrelationship between the sensors may be used to transform the orientation of the common FOV into the individual FOVs of the individual sensors in the sensor arrangement in a 2D or 3D space. Similarly, the pose of a user may for example describe the orientation of the user (e.g. in a horizontal plane through the center of the user's field of vision, or in both horizontal plane and vertical plane through the center of the user's field of vision).

The field of view (FOV) of the scanner or to be considered by the V-SLAM algorithm may be fixed for the given scanner and hence known. The recording of the pose may be for example triggered by the speech input of the user, e.g. by thresholding the amplitude of the microphone input, or by the user pressing a button or performing another trigger operation performed by the user.

The recording of the dimensional data may be considered part of an object annotation process that may be performed as part of the data acquisition process. E.g. the dimensional data of an object in the environment may be considered a class tag (Object) of the object, which may be stored in a database associated with the environment. As such, the class tags may thus also be altered or edited after the object recognition process. Furthermore, although the above examples focus on the user providing speech input to provide the dimensional data, dimensional data of objects in the environment may also be provided by other means and/or not necessarily during the recording process of the sensory and/or image data. In principle, it would be also possible that a user views the recorded image sequence and describes the objects using speech or text during or after the recording process of the image data by the scanner.

Further, it may also be assumed in some implementation examples that the user's position and/or FOV coincides with the position and/or FOV of the scanner (or at least one of its sensors). However, alternatively, there may be also a known or fixed or known spatial interrelation between the user's position and/or FOV and the position and/or FOV of the scanner, which allows matching the relative positions. As explained in connection with method 100 and Fig. 1, this fixed or known spatial interrelation may be exploited in selecting a subset of discrete set of data points forming a 3D point cloud for object search.

After scanning an environment or at least partly in parallel thereto, a SLAM algorithm is used by some computing device (e.g. as part of the scanner or in a separate device) to generate a 3D point cloud in block 204 based on the sensor data of the scanner. In some embodiments, the 3D point cloud representing a map of the environment may be continuously updated while the scanner is moving within the environment and records the environment. The scanning or recording of the environment may be finished and the entire scan data and/or recorded image sequence(s) may be provided to SLAM algorithm for processing. Alternatively, the SLAM algorithm may receive and start processing scan data and/or image sequences from the scanner in a continuous process, to generate and continue updating the 3D point cloud while the data acquisition is ongoing. This is indicted by the dotted arrow between blocks 202 and 204 in Fig. 2. The poses of the scanner/user when recording the language prompts may be retrieved by the SLAM algorithm as well, if they contain trajectory data providing some trajectory hints or cues that can be exploited by the SLAM algorithm in the generation of the 3D point cloud. By incorporating new sensor data over time, the SLAM algorithm may continuously refine the estimated poses and update the map. The SLAM algorithm used in block 204 is not limited to a specific type of SLAM algorithm. For example, filtering-based SLAM methods as well as optimization-based SLAM methods may both be used in block204. In some example embodiments, trajectory cues provided with the trajectory data may be used to improve the accuracy of a SLAM algorithm by using them as priors of the scanning system's position and/or trajectory. The consideration of the trajectory data by the SLAM algorithm may substantially decrease the computational burden and memory footprint of the SLAM algorithm, which is especially important when implemented on mobile devices (e.g. tablets or mobile phones).

Humans can accurately estimate their ego-motion, specifically when performing rotations (e.g. turning 90° clockwise or counterclockwise or turning around (180°)). The acquired directional information in the collected trajectory data can be, for example, incorporated into a SLAM algorithm (e.g. V-SLAM algorithm), similar to how wheel odometry is used. The SLAM's computations of the orientation of the scanning device between the two language inputs (e.g. "walking straight" and "done") can then be modified to consider the provided prior, optionally, within some margin of error. The indication(s) on the scanning device's orientation using language inputs may only be indicative of the change of orientation of the device. The orientation of the scanning device is may thus be described in the user's language as a relative rotation of the sensor setup (defined by a coordinate system) with respect to a global or the map's coordinate system. In some embodiments, the trajectory data may also be used to improve loop closure of the SLAM algorithm. Loop closure refers to the ability of a SLAM algorithm to recognize and exploit revisited areas or previously explored parts of the environment. When a system running a SLAM algorithm explores an environment, it collects sensor measurements and builds a map. However, due to sensor noise and uncertainties, errors can accumulate over time, leading to drift in the estimated trajectory and map. Loop closure addresses this issue by identifying instances when the mapping system returns to a previously visited location. By detecting these loops, the system can correct the accumulated errors and refine its estimates, resulting in a more accurate map and trajectory.

To achieve loop closure, the SLAM algorithm may for example employ techniques such as feature matching, appearance-based recognition, or geometric constraints. These methods compare the current sensor measurements with previously stored data to find similarities or correspondences. When a loop is detected, the system can perform a process known as loop optimization, which adjusts the previously estimated poses and map to reduce inconsistencies and align the revisited area with the rest of the map. Loop closure is crucial aspect of SLAM algorithms, because it enables long-term mapping and localization in SLAM systems. Without loop closure, errors would accumulate, causing the estimated map to drift away from the actual environment and leading to unreliable localization. By identifying and exploiting loop closures, SLAM systems can maintain global consistency, improve accuracy, and ensure reliable mapping and localization even over extended exploration periods. The process of loop closure detection (LCD) is thus a key factor for the overall accuracy of the reconstructed map. Commonly, a human can accurately remember a previously explored position, using visual landmarks. For example, standing in the middle of a door, aligning oneself with a hallway for orientation, or standing directly in front of an object. When recording the revisiting of already visited positions in the exploration of the environment using trajectory data, accurate information for the loop closure process is available. For example, as noted above, voice recording of the user's positional cues may be used to indicate locations within an environment that are revisited. The language input of the user may follow a predetermined input format that can be translated into trajectory data, e.g. using a speech-to-text system. For example, the user may state "visiting P1" when setting up a first position P1 that is intended to be used for loop closure at a later point, and "revisiting P1" once the loop can be closed. The extracted strings are then split and associated with each other using the <visit/revisit>-format. The process of using language to indicate a loop closure may be more robust than a tactile solution, specifically, for smaller SLAM-capable scanners/systems, such as tablets or mobile phones, where additional operation of the device affects the trajectory itself.

A simpler solution to provide cues for loop closure may be only remembering the positions and orientations where loops can be closed and provide a language input such as "visit" and "revisit". In this case, visual information needs to be stored by the SLAM algorithm after the prompts are recorded, and feature matching can be used to assign the correct positions.

Blocks 206-210 illustrates operations that are performed on the 3D point cloud (also denoted map) that has been produced by the SLAM algorithm in block 204. In block 206 a pose (e.g. defined by the orientation and/or FOV of the user or scanner in a 2D or 3D coordinate system) associated with a dimensional data of an object may be used to extract a view frustum of the reconstructed 3D point cloud for subsequent primitive extraction and object detection. By defining a frustrum - or a volume or subset of the 3D point cloud in a more general sense-that is (likely) to contain the object to be detected, the volume of the 3D point cloud to be considered for the primitive extraction and/or object search, and thus the computational burden and memory footprint, can be significantly reduced. In those examples, the object to be detected is assumed to be (more or less) in front of the scanner/user. For example, when considering the user to provide the dimensional data of the object based on a language input, the user would commonly describe an object in the user's vicinity and FOV. In further examples, the dimensional data may also allow for directional indications of the object position relative to the user upon recording the language input, "chair is at 3 o'clock", to indicate another direction other than in front of the user. In such cases, the directional indications may be considered in the frustrum extraction. Note that the frustrum extraction in block 206 is optional, i.e. when not used the primitive extraction in block 208 and object detection in block 210 may be performed on the entire 3D point cloud. The frustrum extraction 206 may for example be useful when scanning large environments, while it may be less relevant in scanning a small environment, e.g. a single office room in a building. Instead of a frustrum, in some embodiments, the object search may be based on another volumetric subset of the 3D point cloud to reduce the search space. For example, it would be also possible to use a cube, a slice or a sphere in front of the user/scanner instead of a frustrum.

The dimensions of the frustum (or the selected subset of the 3D point cloud in more general terms) should be selected such that the object to be detected is contained in the frustrum in its entirety. Starting out from the pose of the scanner associated with the dimensional data of the object of interest, a frustum in the FOV of the scanner can be extracted. The frustrum may have an aperture angle defined by the largest dimension of the dimensional data (e.g. height, width, and depth) for the given object to be detected. Hence, in this example implementation, the largest dimension and not just, e.g. the (estimated) width of the object is considered, since the object detection may not assume that the objects are oriented according to gravity. Optionally, the frustrum may be limited at a predetermined or configurable threshold distance from the scanner in observation direction. This may be for example mimic the observation that a user would commonly describe an object that is within a certain distance from the user using the language prompt, rather than an object far from the user. The parameters such as aperture angle and threshold distance may for example be modified to match the scanner configuration and user preference. In case the accuracy of the SLAM algorithm is not known or has proved to be less accurate, the parameters may be adapted to ensure that the object is fully present in the frustum.

In a next step, the 3D point cloud or the selected subset of its data points may be segmented into distinct "segments" and to perform the object detection on the identified segments. In some embodiments, the segmentation may for example ensure over-segmentation of the (selected subset of the) 3D point cloud. One example for such segmentation is the extraction of primitives, as shown in block 208. Block 208 illustrates primitive extraction based on the 3D point cloud generated by the SLAM algorithm. If a subset of the 3D point cloud has been selected in the block 206, the primitive extraction may be performed on the selected subset of the 3D point cloud only. If no such subject of the 3D point out has been selected in block 206 (i.e. if no frustrum extraction has been performed), primitive extraction may be performed on the entire discrete set of data points forming the 3D point cloud.

The primitive extraction is a process of identifying geometric shapes in the discrete data points forming the 3D point cloud generated by the SLAM algorithm. Those extracted shapes are commonly denoted "primitives". The primitive extraction may, for example, consider parameters such as spatial distance, shape similarity and surface conductivity of the individual discrete data points in the 3D point cloud. In some example embodiments, primitives extracted in block 208 may be for example planes. In addition, or alternatively, the primitives may be also linear shapes, cylindric shapes or spherical shapes, but also other primitive types may be extracted. The disclosure is not limited in this respect. The primitives may be for example identified using a RAndom SAmple Consensus (RANSAC) algorithm which extracts shapes (e.g. planes) by maximizing the score of randomly samples point sets. For example, an EfficientRANSAC algorithm as suggested by Ruwen Schnabel et al., "Efficient ransac for point-cloud shape detection", Computer graphics forum, Volume 26, pages 214-226, 2007, incorporated herein by reference, may be used for primitive extraction from the 3D point cloud. On example implementation of an EfficientRANSAC algorithm that may be used in implementing this disclosure is the MonteBoxFinder as proposed by Ramamonjisoa et al., "Monteboxfinder: Detecting and filtering primitives to fit a noisy point cloud", Proceedings of the 17th European Conference on Computer Vision - ECCV, Tel Aviv, Israel, October 23-27, 2022, pages 161-177, 2022, incorporated herein by reference, can be used. However, this disclosure is not limited to the use of these example RANSAC implementations.

In some embodiments, RANSAC algorithm is employed for primitive extraction in block 208. The parameters of the RANSAC algorithm are set so as to oversegment the shapes. When detecting objects by combining primitives, oversegmentation is less likely to decrease the retrieval performance, rather than undersegmentation of the shapes. More efficient primitive extraction may thus be achieved, as the parameters of the RANSAC algorithm do not have to be adapted to particular sensor types and/or 3D point out density. For example, the normal vector threshold should be reduced if the scene is reconstructed with a scanner that has higher distortions, and the minimum points threshold may be adapted in case the 3D point cloud resolution is lower.

In some embodiments, other segmentation methods may be used other than a primitive extraction, such as for example, super point extraction (e.g. see Landrieu et. al, "Point Cloud Oversegmentation with Graph-Structured Deep Metric Learning", Computer Vision and Pattern Recognition, 2019, available at https://arxiv.org/abs/1904.02113), unsupervised segmentation (e.g. Sima et al., "An extension of the Felzenszwalb-Huttenlocher segmentation to 3D point clouds", Proceedings of SPIE - The International Society for Optical Engineering, 2013, available at https://robotik. informatik.uni-wuerzburg.de/telematics/download/icmv2012.pdf incorporated herein by reference) or region growing (e.g. see the Github implementation at https://github.com/PointCloudLibrary/pcl/blob/master/doc/tutorials/content/re gion_growing_s egmentation.rst incorporated herein by reference). When working with images of the environment, another example for implementing segmentation may be superpixel extraction optionally followed by a projection to the point cloud to obtain over-segmentation. An example superpixel extraction methods include, for example, Felzenszwalb's efficient graph based segmentation, Quickshift image segmentation, SLIC - K-Means based image segmentation, Compact watershed segmentation of gradient images, etc. - see also https://scikit-image.org/docs/stable/auto_exam ples/segmentation/plot_segmentations.html incorporated herein by reference. Hence, in the following, the term "primitive" may also denote a segment of another segmentation method that is used to identify connected regions of data points in a 3D point cloud.

Next, in block 210, object detection is performed to detect the objects in the environment. The object detection is based on the primitives extracted in the block 208. In some embodiments, the object detection in block 210 may be for example implemented as described in connection with the method 100 in Fig. 1. In alternative embodiments, other object detection mechanisms that do not rely on dimensional data could be used.

Figs. 3 to 14 illustrated an example embodiment of performing object detection in line with the method 100 discussed in connection with Fig. 1. Fig. 3 exemplarily illustrates an environment in which a chair 412 is placed in front of a table 402. To the left of the chair 412, and underneath the table 402, there is a garbage can 408. It is assumed that data acquisition of the scene using a scanner is accompanied by the user providing some language cue on the chair's dimensions. For instance, the user may provide a speech input "chair 90 cm by 50 cm by 50 cm", which may be translated into dimensional data, for example using a text-to-speech application. Accordingly, the dimensional data for the chair 412 yield a height of 90 cm, a width of 50 cm and a depth of 50 cm of the chair 412 in the X-, Y-and Z-direction of the coordinate system exemplarily shown in Fig. 3.

Fig. 4 illustrates the primitives of the scene depicted in Fig. 3 that are extracted in the step of primitive extraction (see for example block 208 of Fig. 2). The primitive extraction may generate primitives for the tabletop 404 and the four table legs 406-1, 406-2, 406-3 and 406-4. Assuming that primitive extraction detects planes and linear structures, the garbage can 408 is represented by individual plane-like portions 410-1, 410-2, 410-3 and 410-4. Similarly, the primitive extraction may extract primitives for the chair back 414, the four chair legs 416-1, 416-2, 416-3 and 416-4, the seat 420 of the chair 412 and the connecting struts 418-1 and 418-2 connecting the seat 420 and the chair back 414. Note that the association of the individual primitives to the three objects in the scene are unknown at the time of primitive extraction. Hence, Fig. 4 is thought to illustrate the primitives that are likely generated by primitive extraction from a 3D point cloud of the scene in Fig. 3.

Fig. 6 illustrates the translation of the dimensional data into the bounding box 602 indicating the dimensions of the chair 412 as perceived by the user when providing the language input. Fig. 7 is thought to exemplarily illustrate the BBV generation as discussed in connection with block 106 of Fig. 1.

Specifically, Fig. 7 exemplarily illustrates how, for example, the primitive of the chair back 414 is enclosed by a bounding box volume 714. The bounding box of the BBV714 may for example have at least six parameters: 3 parameters to indicate the position/coordinate of a reference corner of the bounding box (for example the lower left front corner) and 3 parameters to indicate width, height and depth of the BBV 714. Optionally, additional 3 parameters may describe the orientation relative to the position/coordinate of the reference corner of the bounding box (i.e. the bounding box of 17 may be described by a total of 9 parameters). The other primitives extracted from the 3D point cloud of the scene may be likewise enclosed in BBVs.

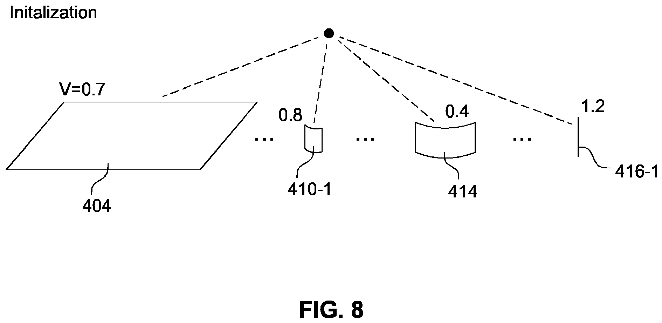

Figs. 8-14 illustrates an exemplary sequence of steps of the tree-based object search algorithm that can be used in block 108 to find the optimal combination of BBVs that has a bounding box with extents that best fit into the spatial dimensions of the object of interest as defined by the dimensional data. The "best fit" may yield, in some exampled embodiments, a bounding box of a combination of BBVs that minimizes or maximizes a volumetric criterion indicative of how well the volume of the bounding box of the combination of BBVs fits into a volume of the object as defined by its spatial dimensions contained in the dimensional data of the object. For example, the volume of a bounding box of the combination of BBVs may have a width, height and depth that best matches with the width, height and depths of the target object in terms of minimizing the differences between the two volumes.

In some embodiments, each of the BBVs may be parameterized by the position of the BBV's center, (optionally) three rotation angles, and the extents (height, width, depth) of the box. The "best fit" may, for example, yield a bounding box of a combination of BBVs whose extents are comparable to the dimensional data provided as speech input by the user (see Fig. 6), provided for example as language input. One exemplary function that may be used to measure the fit is the mean squared error (MSE). The MSE yields a value which indicates how well a combination of BBVs fits the size estimate:

$$v = \min(\frac{1}{3}((BBV_h - D_h)^2 + (BBV_w - D_w)^2 + (BBV_d - D_d)^2))$$

Where $BBV_{h,w,d}$ represent the height, width and depth of the computed bounding box and $D_{h,w,d}$ the dimensional data provided as speech input by the user. In this example, it is not assumes that the target object is rotated in a particular way, so that a minimization (denoted by the min() operator) over the 6 possible combinations of dimensional data (hwd, hdw, whd, wdh, dhw, dwh) is used in the above equation. Using the dimensional data instead of the volume may improve the performance, since using the volume for comparison only considers a single scalar, while the extents optimize over three variables.

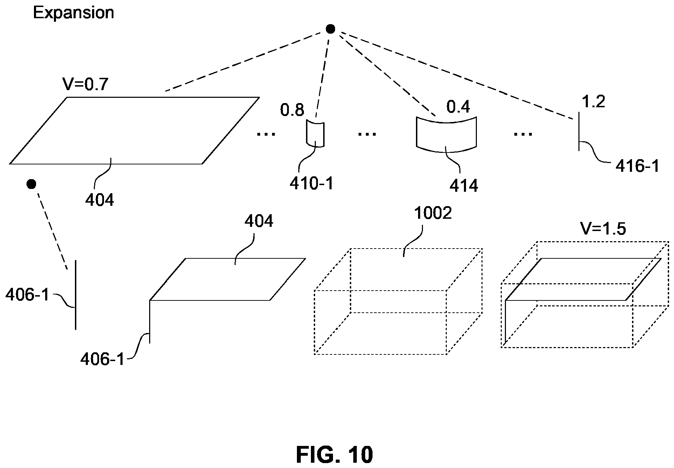

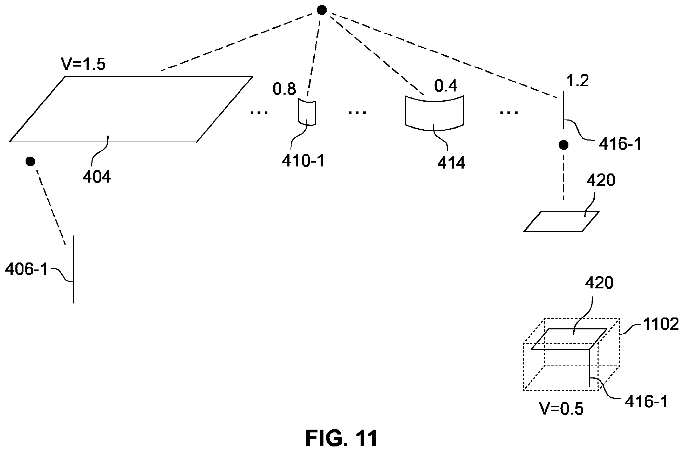

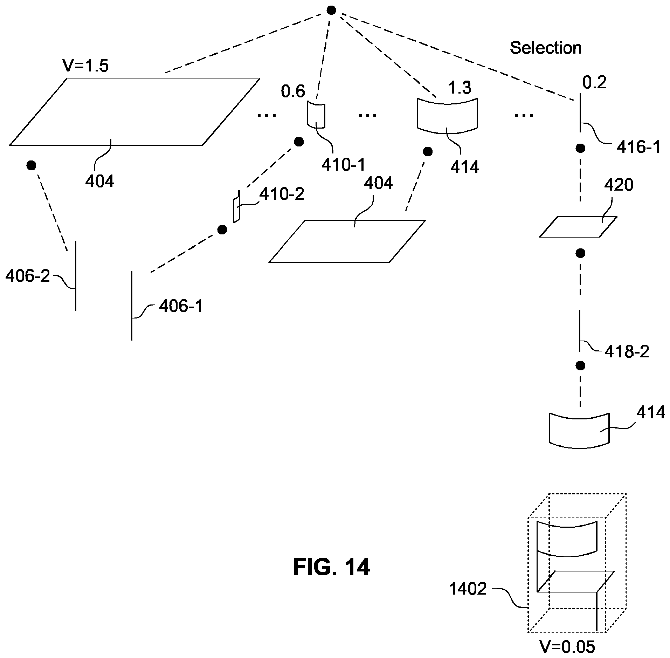

A tree search may be used to find this combination of bounding box volumes, wherein the MSE is used to compute the value v at a given node. For example, the combinations of BBVs of FIG.10 represents an entire table, and its bounding box is thus much larger than the dimensional data (FIG.6). Accordingly, the error is large and yields a value of 1.5. In the next iteration (FIG. 11), the combination of primitive for which a BBV is computed is the leg of a chair and its seat, which is a better fit and has a value v of 0.5. The tree search may retrieve a combination of BBVs that minimizes the equation above (see FIG. 14).

Figs. 8-14 show a non-limiting example implementation of a tree search algorithm-based object detection of identifying a combination of co-located BBVs that match with the dimensions of the chair 412 as described by its dimensional data. Each of the BBVs generated for the primitives of the scene may be assigned a value v that is a measure of the deviation of the BBV's dimensions from the dimensions of BBV 602 matching with the dimensional data of the target object the chair 412 in this example. The higher the value v assigned to a given BBV for the primitives, the higher is the deviation of the dimensions. Thus, the lower the value v, the better the dimensions of the BBV matches with the dimensions of the BBV 602 of the target object, i.e. chair 412 in this example. Note that the tree search may be terminated upon an (updated) value v for a given (combined) BBV corresponding to one or more of the primitives meets a threshold criterion. We will assume for exemplary purposes only that the threshold value for the value v leading to termination of the tree search *is v ≤ 0.05*. The bounding box of (combined) the BBV(s) corresponding to the one or more (combined) primitives meeting the threshold criterion is considered to correspond to the object of interest. Note that the search may also be based on multiple threshold values and meeting one or more of the threshold criteria could cause termination of the object search. A further termination criterion might be, for example, a predetermined number of selection, expansion and update steps without any of the values v meeting the defined threshold value.

Fig. 8 illustrates the initialization of the tree, where all primitives 404, 406-1 to 406-4, 410-1 to 410-4, 414, 416-1 to 416-4, 418-1, 418-2 and 420 are added as leaves to a root node of the tree. Note that Fig. 8 does not show all those primitives but only some examples of the set of primitives. The value v of the respective primitive is indicated next to each of the example primitives shown in Fig. 8. Note that the values v for the individual primitives are only exemplary and for illustration of the tree search algorithm only.

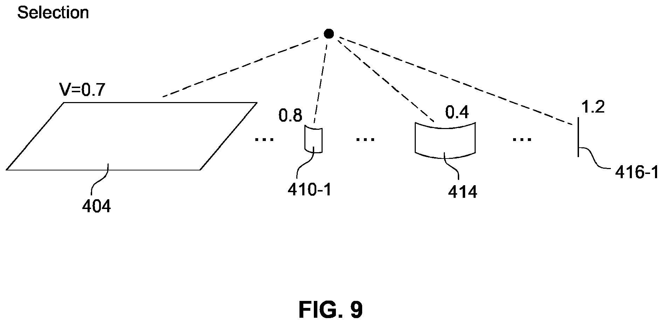

Next, a selection step somewhat similar to that of a Monte Carlo tree search is performed as illustrated in Fig. 9. In this example, UCT (Upper Confidence bound applied to Trees) criterion is used for in the selection step to select a (next) primitive, but also other criteria may be used, e.g. a $\varepsilon$-greedy criterion. The UTC criterion for the selection step may be defined as:

$$UTC_j = X_j + C \cdot \sqrt{\frac{\log(n)}{n_j}} \qquad (1)$$

where $X_j$ is the mean reward of the node $j$, C is the user defined constant that governs the exploration-exploitation trade-off, $n_j$ is the number of times the node $j$ has been visited and $n$ is the number of times its parent has been visited. In the example of Fig. 9, the tabletop 404 is selected as the first primitive based on the UTC criterion.

Fig. 10 illustrates a first expansion step that is somewhat similar to the expansion step of a Monte Carlo tree search. The selected node, i.e. the primitive of the tabletop 404 is expanded by adding one 406-1 of the table legs. In the illustrated example, only one primitive is added as a child node 406-1 to the selected leaf node 404. However, the expansion step may also add more than only one child node, for example to child nodes to the leaf node - when adding more than one child node in the expansion step, the update step may be applied to a node's parent, and that selection criterion of the selection step may be computed at each level of the tree.

The primitive(s) added to the selected leaf node, here tabletop 404, may be selected to maximize/minimize a spatial metric. The spatial metric ensures that one or more BBVs of primitives which are (spatially) co-located to the BBV of the selected primitive 404 are used for the expansion. In the example scene of Fig. 3, the table legs 406-1 to 406-4 of the table 402 will have BBVs that are abutting or even overlapping with the BBV of the tabletop 404. Accordingly, in the example of Fig. 10, the primitive of the table leg 406-1 is selected to expand the primitive of the tabletop 404 as shown at 1002. The BBVs of the combination of the two primitives corresponding to the tabletop 404 and the table leg 406-1 are combined to define a new BBV 1002 that encloses the two primitives as illustrated at 1006.

As noted above, the expansion step may add one or more child nodes to a given leaf node using a spatial metric. For example, the spatial metric may be a 3D intersection over union (IoU), a bounding box disparity (BBD) or a variant thereof, a bounding box center disparity (BBCD). The BBD is a metric that also relates non-overlapping bounding boxes (e.g. see for example Adam et al., "Bounding box disparity: 3d metrics for object detection with full degree of freedom", 2022 IEEE International Conference on Image Processing (ICIP). IEEE, 2022, incorporated herein by reference), in contrast to the 3D IoU. Essentially, it is a combination of 3D IoU and mesh-to-mesh distance, where the latter is used in case two bounding boxes $bb_i$ and $bb_j$ do not overlap:

$$BBD(bb_i, bb_j) = 1 - IoU(bb_i, bb_j) + m2m(bb_i, bb_j) \qquad (2)$$

where $m2m()$ is the mesh-to-mesh distance, i.e. the smallest L2 distance between the two bounding boxes $bb_i$ and $bb_j$.

$$BBCD(bb_i, bb_j) = 1 - IoU(bb_i, bb_j) + c2c(bb_i, bb_j) \qquad (3)$$

where $c2c()$ is the L2 distance between the centroids of two bounding boxes $bb_i$ and $bb_j$.

Furthermore, in an update step, the value v is determined for the BBV 1002 enclosing the two primitives to indicate the deviation of the BBV 1002 from the BBV 602 of the chair 412 as yielded by the dimensional data of the chair 412. As indicated in the example of Fig. 10, the value $v = 1.5$ indicates that BBV 1002 that encloses the primitives of the tabletop 404 and the table leg 406-1 substantially deviates in volume from the volume of BBV 602.

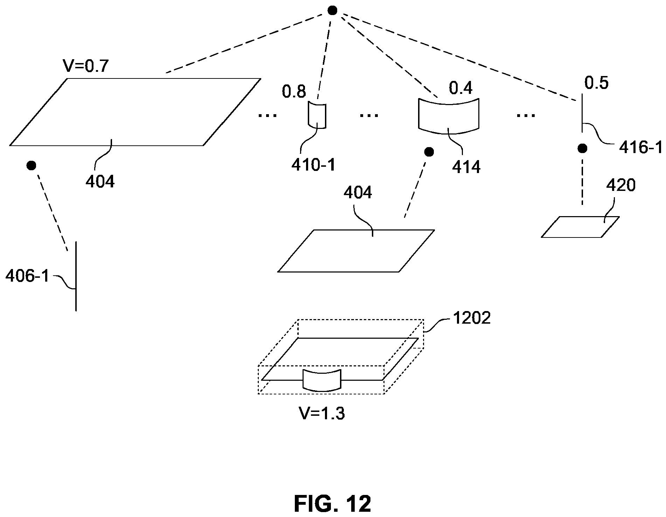

The resultant updated tree, including the updated value v for the extended leaf node 404 ($v = 1.5$) is shown in Fig. 11. Subsequently, selection, expansion and update steps may be repeated until meeting one or more termination criteria, as noted above. Second selection, expansion and update step are illustrated in Fig. 11. The selection results in the selection of the chair leg 416-1, which is the rightmost child node of the root node. The extension step may lead to adding the primitive of the chair seat 420 to the primitive of the chair leg 416-1 of the chair 412, like the process illustrated in connection with Fig. 10. The BBVs of the combination of the two primitives corresponding to the seat 420 and the chair leg 416-1 are combined to define a new BBV 1102 that encloses the two primitives. The update step, a value v is determined for the BBV 1102 enclosing the two primitives to indicate the deviation of the BBV 1102 from the BBV 602 of the chair 412 as yielded by the dimensional data of the chair 412. As shown in the example of Fig. 11, the value $v = 0.5$ indicates that BBV 1102 that encloses the primitives of the seat 420 and the chair leg 416-1 reduces the overall deviation in volume from the volume of BBV 602. The resultant updated tree, including the updated value v for the extended leaf node 416-1 ($v = 0.5$) is shown in Fig. 12.

Fig. 12 further shows another round of selection, expansion updated steps. The selection step selects the chair back 414. Since it is exemplary assumed that the chair 412 is pushed up to the table 402, as shown in Fig. 3, the expansion step selects the primitive of the tabletop 404 for expanding the primitive corresponding to the chair back 414. This will result in a new BBV 1202, resulting into an updated value of $v = 1.3$ for BBV 1202 that encloses the primitives corresponding to the chair back 414 and the tabletop 404. This updated value of v yields a substantial deviation of the BBV 1202 from the volume of BBV 602.

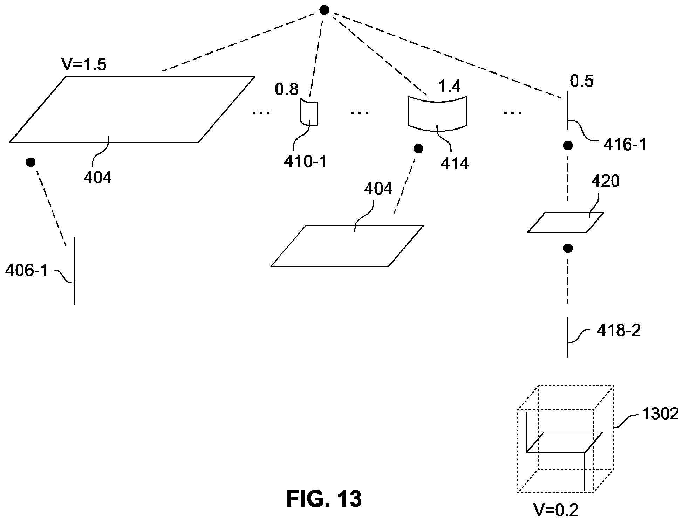

Fig. 13 shows yet another round of selection, expansion, and update steps, where the rightmost branch of the tree is selected again. This time, the expansion adds the primitive of one 418-2 of connecting struts 418-1 and 418-2 and another child node in the rightmost branch. The bounding box of the BBV 1302 enclosing the resultant combination of primitives yields an updated value of $v = 0.2$ for BBV 1302 yielding that the volume of BBV 1302 approaches the volume of BBV 602.

Fig. 14 shows another set of selection, expansion and update steps, after some further iteration(s) of the tree search. Here, again the rightmost branch is selected and the extension step now as the primitive of the chair back 414 to the combination of primitives in Fig. 13. Notably, the bounding box now has a BBV 1402 that substantially corresponds to the BBV 602 of the chair 412 as indicated by the dimensional data. This is also reflected in the updated value of $v = 0.05$ for BBV 1402 that yields a very small deviation in volume between the two bounding boxes. The updated value of $v = 0.05$ for terminating also meets the threshold criterion, so that the final bounding box enclosing BBV 1402 will be considered to correspond to the object of interest described by the dimensional data, i.e. the chair 412.

It should be noted that in some embodiments of this disclosure, the object search may be terminated once the bounding box having a BBV yielding an updated value of v that meets one or more threshold criteria, as noted above. This may imply that not all the primitives of the object of interest as described by the corresponding dimensional data may have been identified and/or form part of the bounding box upon termination of the object search. In this case, it may be assumed that the object detection aims at detecting the optimal combination of BBVs that has a bounding box with a maximum volume still fitting into the spatial dimensions of the object of interest as defined by the dimensional data.

In some alternative embodiments, once a combination of primitives yields a combined BBV meeting the threshold criterion, the process may continue to identify further (if possible, all) primitives, respectively their BBVs, belonging to the object of interest. For this, the combination of primitives may be further expanded by adding additional primitives in the manner shown above to the combination of primitives, as long as the respective added primitives do not increase the updated value $v$ to exceed the threshold criterion.

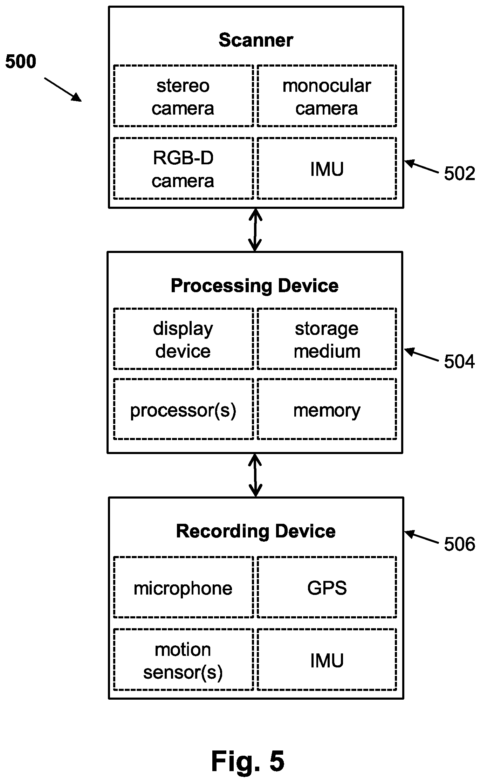

Fig. 5 shows an example system 500 in which embodiments of this disclosure can be implemented. The system may comprise a scanner 502, a processing device 504 and the recording device 506. The scanner 502 may be any scanning device or system that is suitable to scan or image an environment (including one or more objects of interest) in a way that allows reconstruction of a 3D point cloud representing the environment using a SLAM algorithm. The scanner 502 may for example use one or more sensors to scan or image the environment. For example, the one or more sensors may be selected from a group comprising: monocular cameras, stereo cameras, time-of-flight (TOF) cameras (RGB-D), LiDAR sensors, and 3D laser scanners. Typically, cameras or LiDAR sensors record a series of images as the camera/sensor moves in the environment (thereby traveling along a trajectory in the recording process), while 3D laser scanners are commonly stationary when recording the environment. The scanner 500 to might also include and IMU. The IMU may be for example used to estimate the scale of the environment, which is useful when using a monocular camera for data acquisition. The scanner 502 may be coupled to a processing device 504 via an interface that is indicated by a two-headed arrow in Fig. 5. In some embodiments, the interface may be a wired or wireless interface facilitating the transmission of the image data obtained by means of the one or more sensors contained in the scanner 502. Note that in some embodiments, the scanner 500 to might (also) include processor(s) to perform the SLAM algorithm. In this case, the 3D point cloud generated by the SLAM algorithm might be transferred to the processing device 504 via of the interface between the scanner 502 and the processing device 504.

The processing device 504 may include one or more processors that facilitate performing the SLAM algorithm and/or the object detection based on the 3D point cloud representing the environment, as described on one of the embodiments herein above. The one or more processors may include one of or a combination of (single-core or multi-core) CPUs, GPUs, hardware-accelerators, Field Programmable Gate Arrays (FPGAs), Application Specific Integrated Circuits (ASICs), Programmable Logic Devices (PLD), etc. The processor(s) may be implemented as a System on Chip (SoC) or System in Package (SiP). However, this disclosure is not limited to these types of processing units. The processor(s) of the processing device 504 may be communicatively coupled to memory to store and retrieve data from the memory. The memory can be a volatile or non-volatile memory or a combination thereof. Volatile memory may include, for example RAM (Random Access Memory), such as SRAM or SDRAM, and/or cache memory. Non-volatile memory may be for example include one or more of ROM (Read-Only Memory), flash memory (e.g. USB flash drives, SSDs (Solid State Drives), memory cards, etc.). The processing device 504 may optionally also include one or more computer-readable media which can be used to store instructions that when executed by the one or more processors of the processing device 504 because the processing device 504 to perform a SLAM algorithm to generate a 3D point cloud and/or object detection based on the 3D point cloud in order to detect one or more objects of interest in an environment represented by the 3D point cloud in accordance with one of the different embodiments disclosed herein. The processing device 504 (and optionally also the scanner 502) may be communicatively coupled to the recording device 506 we are an interface in a similar fashion as described for the interfacing of the processing device 504 and the scanner 502 to above.

The recording device 506 may include one or more microphones to record the speech input of the user that is used to generate the directional/trajectory data and/or the dimensional data of the objects of interest in the environment. The recording device 506 may also include one or more of motion sensor(s), a GPS device and/or IMU to allow the recording device 506 to associate a recorded speech input to some position and/or pose of the user upon recording. As outlined above, the position and/or pose of recording this speech input might be associated with the directional/trajectory data and/or the dimensional data of the objects of interest in the environment. Although not shown in Fig. 5, the recording device 506 might also include one or more processor(s) to generate the directional/trajectory data and/or the dimensional data from the speech input of the user. For example, the recording device 506 may implement a speech-to-text system to perform speech-to-text conversion. In alternative examples, the recording device 506 may provide the speech input of the user to the processing device 504 and the processing device 504 may performs a speech-to-text conversion to obtain the directional/transitory data and/or the dimensional data from the speech input of the user.

In some embodiments, the scanner 502 and the processing device 504 might be, for example, a single device (having a common housing). In some embodiments, the scanner 502 and the recording device 506 might be, for example, a single device (having a common housing). In yet other embodiments, processing device 504 and the recording device 506 or a single device (having a common housing). Further embodiments, the scanner 502, processing the device 504 and the recording device 506 are imported in one single device (having a common housing). In those embodiments, the single device might be for example a mobile phone (smart phone) ortablet. This disclosure is not limited in this respect. The scanner 502, the processing device 504 and the recording device might also be implemented at least in part in distinct devices (for example, a 3D laser scanner implementing the scanner 502 connected to a tablet implementing the processing device 504 and the recording device 506; or a LiDAR scanner implementing the scanner 502 connected to a laptop computer implementing the processing device 504 and an audio recording device implementing the recording device 506).

The disclosure has been described with reference to specific embodiments for purpose of explanation only. However, the example embodiments and example implementations described herein above are not intended to be exhaustive or to limit the invention to the precise forms disclosed. Many modifications and variations are possible in view of the above disclosure. The example embodiments and example implementations were chosen and described to explain the principles of the invention and its practical applications, to thereby enable others skilled in the art to best utilize the invention and various embodiments with various modifications as are suited to the particular use contemplated.

**Claims**

1. A computer-implemented mapping method comprising:

   obtaining a discrete set of data points forming a 3D point cloud representing a scan of an environment comprising one or more objects;
   obtaining object data, including at least dimensional data describing spatial dimensions of an object of the one or more objects in the environment, the object data being associated with a position within the environment;
   generating bounding box volumes of primitives identified in at least a subset of the discrete set of data points forming said 3D point cloud around the position associated with the dimensional data of the object, said subset forming a portion of the environment;
   finding a combination of bounding box volumes that includes spatially co-located bounding box volumes in said subset of the discrete set of data points around the position associated with the object data of the object and that has bounding box whose extents best fit the spatial dimensions of the object; and
   identifying the combination of bounding box volumes to correspond to the object.

2. A system comprising:

   a scanner configured to perform a scan an environment comprising one or more objects;
   a processing unit configured to:

      obtain a discrete set of data points forming a 3D point cloud representing said scan of the environment;
      obtain object data, including at least dimensional data describing spatial dimensions of an object of the one or more objects in the environment, the object data being associated with a position within the environment;
      generate bounding box volumes of primitives identified in at least a subset of the discrete set of data points forming said 3D point cloud around the position associated with the dimensional data of the object, said subset forming a portion of the environment;
      find a combination of bounding box volumes that includes spatially co-located bounding box volumes in said subset of the discrete set of data points around the position associated with the object data of the object and that has bounding box whose extents best fit the spatial dimensions of the object; and
      identify the combination of bounding box volumes to correspond to the object.

3. The system of claim 2, wherein the dimensional data is further associated with a position and orientation of the user in the environment; and
   wherein the processing unit is configured to select the subset of the discrete set of data points forming said 3D point cloud based on the position and orientation of the user in the environment.

4. The system of claim 3, wherein the processing unit is further configured to:

   determine a human field of view of the user based on the position and orientation of the user in the environment; and
   select the subset of the discrete set of data points forming said 3D point cloud around said position to correspond to a subset of the discrete set of data points that is in the field of view of the user and optionally within a maximum distance from the position of user in the environment.

5. The system according to one of claims 2 to 4, wherein the processing unit is configured to form the set of bounding box volumes by:

performing a deterministic tree search over combinations of bounding box volumes of primitives to find said combination of bounding box volumes having bounding box whose extents best fit the spatial dimensions of the object; and
wherein said deterministic tree search comprises comparing spatial dimensions of a bounding box of the respective combinations of bounding box volumes with the spatial dimensions of the object described in the dimensional data.

6. The system according to one of claims 2 to 5, further comprising:

a recording device configured record audio data of a speech input of the user, the speech input including an oral description of spatial dimensions of the object and optionally an approximated position of the object in the environment;
the processing unit is further configured to:

receive the audio data comprising said speech input of a user;
extract said spatial dimensions of the object and optionally the approximated position of the object in the environment from the audio data; and
generate the dimensional data based on the extracted spatial dimensions of the object and optionally further based on the approximated position of the object in the environment.

7. The system according to claim 6, wherein the recording device is co-located with a scanner unit so that position of the recording device and the scanner coincide with one another, and/or wherein upon recording the speech input of the user, the human field of view of the user is supposed to match with a field of view of the scanner used to scan the environment.

8. The system of one of claims 2 to 7, wherein the processing unit is configured to generate bounding box volumes for the primitives in the discrete set of data points forming said 3D point cloud, and/or wherein the processing unit is further configured to identify the primitives in the discrete set of data points forming said 3D point cloud.

9. The system of one of claims 2 to 8, wherein a scanner includes one or more sensors and is configured to perform 3D scanning of the environment with said one or more sensors.

10. The system of claim 9, wherein the one or more sensors comprise one or more sensors selected from a group comprising: monocular cameras, stereo cameras, time-of-flight (TOF) cameras (RGB-D), LiDAR sensors, and 3D laser scanners.

11. The system of claim 9 or 10, wherein the one or more sensors include a camera, being either one of a stereo camera, monocular camera with an inertial measurement unit (IMU) or a time-of-flight (TOF) camera (RGB-D);

wherein the scanner is configured to performing the 3D scanning of the environment includes using the camera to record a series of images of the environment recorded along a trajectory at spatially distinct positions; and
wherein the processing unit is further configured to:

generate the 3D point cloud of the scanned environment based on series of images of the environment using a simultaneous localization and mapping (SLAM) algorithm; and
receive trajectory data describing the trajectory traveled by the camera in recording the series of images; and
wherein the SLAM algorithm is adapted to consider the trajectory data as a prior in generating the 3D point cloud of the scanned environment.

12. The system of claim 11, wherein the SLAM algorithm is adapted to consider the trajectory data as a prior for loop closure and/or to improve the estimation of the trajectory by the SLAM algorithm.

13. The system of claim 11 or 12, wherein trajectory data describing the trajectory traveled by the camera in recording the series of images comprises individual trajectory hints and/or trajectory cues associated with individual images or sub-sequences of images in the series of images.

14. One or more computer-readable media storing instructions that, when executed by a processor unit, cause the processor unit to perform the following:

obtaining a discrete set of data points forming a 3D point cloud representing a scan of an environment comprising one or more objects;
obtaining object data, including at least dimensional data describing spatial dimensions of an object of the one or more objects in the environment, the object data being associated with a position within the environment;
generating bounding box volumes of primitives identified in at least a subset of the discrete set of data points forming said 3D point cloud around the position associated with the dimensional data of the object, said subset forming a portion of the environment;
finding a combination of bounding box volumes that includes spatially co-located bounding box volumes in said subset of the discrete set of data points around the position associated with the object data of the object and that has bounding box whose extents best fit the spatial dimensions of the object; and
identifying the combination of bounding box volumes to correspond to the object.

15. A computing device comprising the one or more computer readable media of claim 14, and a processing unit configured to execute the instructions stored on the one or more computer readable media.

**100**

obtain a discrete set of data
points forming a 3D point cloud — 102

obtain dimensional data
describing spatial dimensions of — 104
an object

generate BBVs of primitives
identified in at least a subset of — 106
the discrete set of data points

find combination of BBVs that
has a bounding box whose
extents best fit the spatial — 108
dimensions of the object

identify the combination of
BBVs to correspond to the — 110
object

**Fig. 1**

**200**

```
┌──────────────────────────────┐
│      Data acquisition        │ ← 202
└──────────────────────────────┘
                │
                ▼
┌──────────────────────────────┐
│ 3D point cloud generation    │ ← 204
│           using SLAM         │
└──────────────────────────────┘
                │
                ▼
┌──────────────────────────────┐
│     Frustrum extraction      │ ← 206
└──────────────────────────────┘
                │
                ▼
┌──────────────────────────────┐
│     Primitive extraction     │ ← 208
└──────────────────────────────┘
                │
                ▼
┌──────────────────────────────┐
│      Object detection        │ ← 210
└──────────────────────────────┘
```

# Fig. 2

**FIG. 3**

**FIG. 4**

**FIG. 6**

**FIG. 7**

Initalization

V=0.7

0.8

0.4

1.2

...

...

...

404

410-1

414

416-1

**FIG. 8**

Selection

V=0.7

0.8

0.4

1.2

404

410-1

414

416-1

**FIG. 9**

Expansion

V=0.7

404

0.8

410-1

414

0.4

1002

1.2

416-1

406-1

406-1

404

V=1.5

**FIG. 10**

V=1.5

0.8

0.4

1.2

404

410-1

414

416-1

420

406-1

420

1102

416-1

V=0.5

**FIG. 11**

V=0.7

0.8

0.4

0.5

404

410-1

414

416-1

406-1

404

420

1202

V=1.3

**FIG. 12**

V=1.5

0.8

1.4

0.5

... ... ...

404

410-1

414

404

416-1

406-1

420

418-2

1302

**FIG. 13**

V=0.2

**FIG. 14**

**500**

## Scanner

| stereo camera | monocular camera |
| RGB-D camera | IMU |

502

## Processing Device

| display device | storage medium |
| processor(s) | memory |

504

## Recording Device

| microphone | GPS |
| motion sensor(s) | IMU |

506

# Fig. 5

Europäisches
Patentamt
European
Patent Office
Office européen
des brevets

## EUROPEAN SEARCH REPORT

**Application Number**

EP 24 17 1305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2023 0172241 A (HL KLEMOVE CORP [KR]) 22 December 2023 (2023-12-22) | 1-3, 8-10,14, 15 | INV. G06T7/11 |
| Y | * the whole document * | 4 | ADD. |
| A | | 5-7, 11-13 | G06T17/00 |
| | - - - - - | | |
| Y | WEBER DANIEL ET AL: "Multiperspective Teaching of Unknown Objects via Shared-gaze-based Multimodal Human-Robot Interaction", PROCEEDINGS OF THE 23RD INTERNATIONAL MIDDLEWARE CONFERENCE DOCTORAL SYMPOSIUM, ACMPUB27, NEW YORK, NY, USA, 13 March 2023 (2023-03-13), pages 544-553, XP059054049, DOI: 10.1145/3568162.3578627 ISBN: 978-1-4503-9942-5 * figure 2 * * page 546, column 2, paragraph 2 * | 4 | |
| | - - - - - | | |

**TECHNICAL FIELDS SEARCHED (IPC)**

G06T

The present search report has been drawn up for all claims

| Place of search | Date of completion of the search | Examiner |
|---|---|---|
| Munich | 27 August 2024 | Frias Velazquez, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1305

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2024

| Patent document cited in search report | Publication date | Patent family member(s) | Publication date |
|---|---|---|---|
| KR 20230172241 A | 22-12-2023 | NONE | |

EPO FORM P0459

**REFERENCES CITED IN THE DESCRIPTION**

**Non-patent literature cited in the description**

- **CHARLES et al.** Imvotenet: Boosting 3d object detection in point clouds with image votes. *Proceedings of the IEEE/CVF conference on computer vision and pattern recognition*, 2020, 4404-4413
- **CHARLES et al.** Deep hough voting for 3d object detection in point clouds. *Proceedings of the IEEE/CVF International Conference on Computer Vision*, 2019, 9277-9286
- **BARUCH et al.** ARKitscenes - a diverse real-world dataset for3d indoor scene understanding using mobile RGB-d data. *35th Conference on Neural Information Processing Systems Datasets and Benchmarks Track (Round 1)*, 2021
- **CHANG**. Fast oriented bounding box optimization on the rotation group. *ACM Transactions on Graphics (TOG)*, 2011, vol. 30 (5), 1-16
- **BROWNE et al.** A survey of monte carlo tree search methods. *IEEE Transactions on Computational Intelligence and AI in games*, 2012, vol. 4 (1), 1-43

- **RUWEN SCHNABEL et al.** Efficient ransac for point-cloud shape detection. *Computer graphics forum*, 2007, vol. 26, 214-226
- **RAMAMONJISOA et al.** Monteboxfinder: Detecting and filtering primitives to fit a noisy point cloud. *Proceedings of the 17th European Conference on Computer Vision - ECCV, Tel Aviv, Israel*, 23 October 2022, 161-177
- **LANDRIEU**. Point Cloud Oversegmentation with Graph-Structured Deep Metric Learning. *Computer Vision and Pattern Recognition*, 2019, https://arxiv.org/abs/1904.02113
- **SIMA et al.** An extension of the Felzenszwalb-Huttenlocher segmentation to 3D point clouds. *Proceedings of SPIE - The International Society for Optical Engineering*, 2013, https://robotik.informatik.uni-wuerzburg.de/telematics/download/icmv2012.pdf
- Bounding box disparity: 3d metrics for object detection with full degree of freedom. **ADAM et al.** 2022 IEEE International Conference on Image Processing (ICIP).. IEEE, 2022